Europäisches Patentamt

European Patent Office

Office européen des brevets

(11) Veröffentlichungsnummer: **0 490 038 A1**

# EUROPÄISCHE PATENTANMELDUNG

(21) Anmeldenummer: **91117163.5**

(22) Anmeldetag: **09.10.91**

(51) Int. Cl.5: **A23L 1/05**, A23L 1/22,
A23L 1/308

(30) Priorität: **01.12.90 DE 4038342**

(43) Veröffentlichungstag der Anmeldung:
**17.06.92 Patentblatt 92/25**

(84) Benannte Vertragsstaaten:
**AT BE CH DE DK ES FR GB GR IT LI LU NL SE**

(71) Anmelder: **BOEHRINGER INGELHEIM KG**
**Postfach 200**
**W-6507 Ingelheim am Rhein(DE)**
Anmelder: **BOEHRINGER INGELHEIM**
**INTERNATIONAL GmbH**
**Postfach 20**
**W-6507 Ingelheim am Rhein(DE)**

(72) Erfinder: **Kutsch, Horst, Priv. Doz., Dr. habil.**
**Dillinger Strasse 27**
**W-6690 St. Wendel 1(DE)**
Erfinder: **Kaul, Dieter, Dipl.-Ing.**
**Platanenweg 3**
**W-2200 Elmshorn(DE)**

(54) Verwendung von hochgereinigtem vesikulärem Material als Zusatzstoff zu Lebensmitteln und in kosmetischen Zubereitungen.

(57) Die Erfindung betrifft die Verwendung von hochgereinigtem vesikulärem Material als Zusatzstoff zu Lebensmitteln und in kosmetischen Zubereitungen.

EP 0 490 038 A1

Die vorliegende Erfindung betrifft die Verwendung von hochgereinigtem vesikulärem Material aus Pflanzen als Zusatz zu Lebensmitteln und zu kosmetischen Zubereitungen.

Polysaccharide werden auf dem Lebensmittelsektor in verschiedenen Anwendungsbereichen verwendet. Chemisch-physikalisch gesehen handelt es sich um polyanionische, polykationische oder elektrisch neutrale Substanzen. Im Trockenzustand lassen sich dabei unterscheiden: Amorphe Stoffe, kristalline Stoffe und Präparate aus pflanzlichen Zell- bzw. Zellwandtrümmern ("Pflanzenfasern").

Eine neue Klasse von zellstrukturierten Materialien (ZSM) stellen hochgereinigte ganze Zellen bzw. Zellverbände von Pflanzen dar. Die übrigbleibenden Zellwände bestehen nur noch aus den natürlichen Polysacchariden (neutral und polyanionisch). Der leere Innenraum (Vesikel) kann Flüssigkeiten und darin gelöste Substanzen aufnehmen. Die Herstellung solchen Materials ist beispielsweise in der DD-Patentschrift 247 570 beschrieben, wobei dessen Verwendung als Füllmaterial für Flüssigkeitschromatographiesäulen im Vordergrund steht.

Es wurde nun gefunden, daß die Verwendung solcher zellstrukturierter Materialien von Pflanzen (vesikuläre Materialien) als Zusatz zu bestimmten Lebensmitteln, insbesondere von vorgefertigten oder teilvorgefertigten Lebensmitteln deren Qualität bezüglich Konsistenz und Akzeptanz beim Verbraucher entscheidend verbessert. Dabei kann das vesikuläre Material als Hauptbestandteil oder auch als Nebenkomponente fungieren. Das vesikuläre Material kann trocken oder feucht formuliert sein. Bevorzugt ist die Vewendung von vesikulärem Material in einer Menge bis zu 15 Gew.-%, vorzugsweise bis 10 Gew.-%. Der besonders bevorzugte Bereich liegt im Bereich zwischen 0,1 und 3,0 Gew.-%.

Feuchte Formulierungen des vesikulären Materials können zwischen 2 und 10 Gew.-% einer Flüssigkeit, beispielsweise Wasser, Saft oder ähnliches, enthalten, bevorzugte Mischungsverhältnisse sind beispielsweise 1 : 50, 1 : 33 oder 1 : 20.

Ein wesentlicher Vorteil der erfindungsgemäßen Verwendung von hochgereinigtem vesikulärem Material liegt darin, daß zeitabhängige Zustände bei Lebensmittel über einen längeren Zeitraum aufrechterhalten werden können, als dies sonst der Fall ist. So wird beispielsweise die Durchfeuchtung der trockenen Schichten des Lebensmittels durch eine angrenzende feuchte bzw. nasse Schicht zeitlich wesentlich verzögert.

Labile Zustände, wie sie beispielsweise bei Schlagmassen, insbesondere Schlagsahne, Mousse au Chocolat, Sorbets u.a. auftreten können, durch den erfindungsgemäßen Zusatz von hochgereinigtem vesikulärem Material wesentlich verlängert werden.

Vorgefertigte Lebensmittel, z.B. Fleisch-Teigmassen (Frikadellen etc.), die vor dem Verzehr noch gebraten werden müssen, schrumpfen bei diesem Bratvorgang ein. Durch den Zusatz von vesikulärem Material gemäß der vorliegenden Erfindung wird dieser optisch nachteilige Eindruck wesentlich verringert, da dann beim Braten weniger Wasser verdunstet wird.

Nachfolgend werden einige der wichtigsten erfindungsgemäßen Anwendungen und Verfahren von vesikulären Materialien an Lebensmitteln aufgeführt.

1. Trenneffekt zwischen Oberflächen von Lebensmitteln mit jeweils unterschiedlichen Feuchtigkeitsgehalten, wie z.B. Torten, Eiswaffeln, gefüllte Pasteten, Pizzas.

1.1 Aufstreuen von trockenem pulverförmigem vesikulärem Material (Korngröße bis 1 mm und mehr) in jeweils gewünschter Schichtdicke. Anschließend wird das Belagmaterial aufgebracht.

1.2 Aufstreuen von trockenem pulverförmigem vesikulärem Material (Korngröße bis 1 mm und mehr) in jeweils gewünschter Schichtdicke auf Oberflächen von Lebensmitteln. Die Schicht wird anschließend bei 150-200°C ca. 3 Minuten und mehr erhitzt. Danach erfolgt das Aufbringen von Belagmaterial.

1.3 Aufstreuen von trockenem pulverförmigem vesikulärem Material (Korngröße bis 1 mm und mehr) in jeweils gewünschter Schichtdicke auf Oberflächen von Lebensmitteln. Die Schicht wird anschließend kurz mit Wasser besprüht und bei 150-200°C ca. 3 Minuten und mehr angebakken. Danach erfolgt das Aufbringen von Belagmaterial.

1.4 Einrühren von trockenem pulverförmigem vesikulärem Material (Korngröße bis 1 mm und mehr) in jeweils gewünschter Konzentration in Lebensmittel-Teigmassen. Anschließendes An- bzw. Ausbacken der Teigmassen und Aufbringen von Belagmaterial entsprechend 1.1. Analog können auch Waffelprodukte hergestellt werden, die dann weiterverarbeitet (konfektioniert) werden.

1.5 Trockene vesikuläres, pulverförmiges Material wird mit Wasser bis zum Erreichen weichpastöser Konsistenz angerührt. Dieses Gel wird dann in gewünschter Menge in Teigmassen eingebracht. Anschließend An- bzw. Ausbacken der Teigmassen und Aufbringen von Belagmaterial entsprechend 1.1. Entsprechendes gilt auch für Waffelprodukte.

2. Verringerung von Flüssigkeitsverlusten bei der Verarbeitung von Teigmassen. Hierzu läßt man trockenes pulverförmiges vesikuläres Material in Wasser ausquellen, 1 g Trockensubstanz kann dabei bis zum 50-fachen des Trockengewichts an Wasser bzw. Flüssigkeit aufnehmen. Die feuchte Gelmasse wird in gewünschter Menge in Teigmassen (z.B. Hackfleisch enthaltende Teige) eingebracht. Nach dem Braten bzw. Bakken der Teigmassen geht nicht alle in den Vesikeln des vesikularen Materials gespeicherte Flüssigkeit verloren, so daß das erfindungsgemäß behandelte Lebensmittel beim Backvorgang nicht so stark schrumpft wie ein unbehandeltes Lebensmittel. Hierdurch wird eine bessere Akzeptanz beim Verbraucher erreicht.

3. Verkapselung von festen Geschmacksstoffen mit der Absicht ihrer verzögerten Freisetzung (Geschmacksverlängerung). Der/die Geschmacksstoffe(e) wird/werden in wässerigem Ethanol oder Aceton gelöst. In diese Lösung wird trockenes pulverförmiges vesikuläres Material eingerührt und nach der Ausquellung abfiltriert. Das Lösungsmittel wird durch ein geeignetes Trocknungsverfahren aus dem gequollenen Material entfernt, z.B. durch Erhitzen unter vermindertem Druck. Die dabei kollabierenden Zellwände schließen die eingeschleuste Trokkensubstanz ein (Verkapselung). Nicht im Ethanol oder Aceton jedoch im Wasser lösliche Stoffe können durch Quellen in das vesikuläre Material geschleust werden. Anschließend wird das gequollene Material in mindestens 90% Ethanol oder Aceton suspendiert; dabei wird die wasserlösliche Substanz ausgefüllt und verbleibt im vesikulären Innenraum. Durch weiteres Waschen mit mindestens 90% Ethanol wird das restliche Wasser entfernt. Danach wird wie beschrieben getrocknet. Das erfindungsgemäße Verfahren kann bei ionischen Substanzen sowie organischen Stoffen mit einem Molekulargewicht bis 40-50.000 Dalton angewendet werden. Ebenso können feste Substanzen zum Schutz vor Oxidation oder zur Verringerung ihres Eigengeruchs nach dem zuvor beschriebenen Verfahren eingekapselt werden.

Die erfindungsgemäße Verwendung von vesikulärem Material in Lebensmitteln weist den Vorteil auf, daß das Material selbst geschmacksneutral ist, so daß der Eigengeschmack des Lebensmittels nicht verändert wird. Ein weiterer Vorteil ist, daß das vesikuläre Material von seiner Konsistenz so beschaffen ist, daß es im Gegensatz zu anderen Füllstoffen in Lebensmitteln beim Kauen nicht spürbar ist.

Als weitere Anwendungsgebiete in der Lebensmitteltechnologie werden beispielhaft genannt:
Tiefgefrorene vorgefertigte Fleischwaren, wie z.B. Frikadellen, Hamburger, gefüllte Pasteten, Pizzen; Backwaren und Torten, insbesondere solche, bei denen flüssige oder halbflüssige Schichten von trockenen Schichten getrennt werden sollen, wie z.B. mit Obst oder ähnlichem belegte Kuchenböden;
als Zusatz in Teigmassen um ein vorzeitiges Eindringen von Flüssigkeiten in die trockenen Schichten des fertigen Produktes in die daraus hergestellten Produkte zu verhindern, z.B. bei Pasteten, Waffeln, Hörnchen für Eis, Tortenboden, Pizza-Böden, Sandwiches;
als Versteifungs- und Verdickungsmittel sowie zur Stabilisierung von Sahne, Pudding, Jogourts, Marmeladen, Gelees, Ketchup, Mayonnaise, flüssige und halbflüssige Gewürzzubereitungen, Saucen etc.;
als Zusatz zu Fruchtsäften und anderen Flüssigkeiten zur Erhöhung der Viskosität.

Eine weitere Anwendung von vesikulärem Material besteht auf kosmetischem Sektor in der physikalisch stabilisierenden Wirkung in Öl/Wasser-Zubereitungen (physikalischer Emulgator).

Nachfolgend wird ein Verfahren zur Herstellung des vesikulären Materials beschrieben.

## 1. Entfärbung und Lipidextraktion

1.1 Die Zellaggregate werden im Siebgefäß gesammelt und mit Leitungswasser gewaschen (dabei ohne Unterdruck arbeiten).

1.2 Die Zellaggregate werden mit phosphorsaurem Ethanol (1 ml Phorphorsäure pro l 80 - 90 %iges Ethanol) entfärbt. Dazu wird das angesäuerte Ethanol zunächst zweimal in kleinen Mengen (weniger als 10 % des Packungsvolumens) auf die Packung gegeben. Bevor das erste Mal Ethanol zugegeben wird, sollte das Wasser noch in geringer Menge über der Pakkung stehen, damit anfangs ein Ethanolgradient durch die Packung läuft. Nachdem etwa 0,5 l sauren Ethanols in die Packung eingedrungen sind, wird das Material mit 6 l des angesäuerten Ethanols überschichtet. Es wird ohne Unterdruck im Festbett extrahiert. Das Ethanol wird am Ablauf zur Regeneration aufgefangen, sobald der ablaufende Extrakt klar und stark gelb gefärbt ist. Die Extraktion wird danach mit 96 %igem Ethanol fortgesetzt, bis die Zellen entfärbt sind und der Extrakt farblos abläuft (ca. 6 l).

## 2. Enzymatische Protoplasma-Solubilisierung und Extraktion (bezogen auf 3-4 l Packungsvolumen)

2.1 Die ethanolhaltige Packung wird mit 6 l 1%igen Phosphorsäurepuffers gespült. Die erforderliche Menge wird bereitet, indem 1%ge Phosphorsäure (techn.) bei potentiometrischer Kontrolle des pH mit gesättigter $Na_2HPO_4$-Lösung auf pH 2,5 gebracht wird. Das ablaufende Ethanol wird aufgefangen. Es wird ohne Unterdruck gearbeitet. Zunächst wird eine geringe Menge des Puffers in die Packungsoberfläche gerührt, solange etwas Ethanol über der Pakkung steht. Bei diesem Vorgang kommt es darauf an, Klumpenbildung an der Oberfläche zu vermeiden. Nach dem Festwerden der Packung wird 2x mit je 3 l des Phosphorsäurepuffers überschichtet, und das Ethanol wird gesammelt, bis es einen Wassergehalt von 40 % aufweist (Spindel).

2.2 Anschließend wird die Packung mit je 3 l Aqua dest. zweimal aufgerührt und unter Rühren bis zum Festwerden drainiert, anschließend mit 3 l Aqua dest. im Festbett eluiert.

2.3 Die feuchte Masse wird in ein 10 l-Gefäß überführt. Am Siebgefäß anhaftende Reste werden mit dest. Wasser in das gleiche Gefäß gespült. Durch Zugabe von Aqua dest. wird das Valumen der Suspension auf ca. 6 l gebracht. Bei potentiometrischer Kontrolle wird die Suspension mit gesättigter $Na_2HPO_4$-Lösung auf pH 6,5 gebracht, danach werden 7 g KCl und 3 g $NaN_3$ in die Suspension gerührt. 7 g Trypsin zur Zellzucht (Firma Belger, Kleinmachnow) werden in 0,3 l Aqua dest gut verrührt und in die Suspension der Zellaggregate gemischt. Das Gefäß wird abgedeckt und bei Zimmertemperatur (20 - 25 °C) aufgestellt. Nach 24 h werden weitere 7 g Trypsin in oben beschriebener Weise zugegeben.

2.4. Nach etwa 48 h werden die Zellaggregate gewaschen. Hierzu gibt man 5 ml eines konzentrierten neutral reagierenden Spülmittels (Natriumalkylsulfonat) zu der Suspension, überführt sie vollständig mit Nachspülen (Aqua dest.) in das Siebgefäß, läßt die Masse absetzen und verrührt sie zweimal mit 3 l 0.5 %iger NaCl-Lösung. Anschließend wird die Masse abgedeckt und als geschlossene Packung mit 6 l NaCl-Lösung (0,5 %) gewaschen. Hieran schließt sich ein Aufrühren mit 3 l 0,1 M Phosphatpuffer pH 7 (Soerensen) an. Nach dem Festwerden läßt man 3 l Aqua dest. einziehen und benetzt anschließend die Oberfläche mit Ethanol. Beim Einziehen des Ethanols wird die Packung an der Oberfläche leicht verrührt und anschließend mit 80 - 90 %igem Ethanol (1.5 l) überschichtet. Nach dem Einziehen des 80 - 90 %igen Ethanols wird 96 %iges Ethanol (4 l) zugegeben. Das Ethanol läuft ohne Unterdruck durch die Packung. Das durchlaufende Ethanol wird gesammelt, sobald es eine Konzentration von > 60 % erreicht hat.

## 3. Trocknen

Die ethanolhaltige Masse wird auf einer großen Filternutsche durch den Unterdruck einer Wasserstrahlpumpe vom beweglichen Teil des Ethanols befreit. Dabei wird die Masse mit einem Plastspatel an den Rand der Nutsche gepreßt. Sie wird anschließend mit 1 l einer Mischung aus 96 %igem Ethanol und n-Butanol überschichtet (Verhältnis 10/1). Nach dem Einziehen der Ethanol/Butanol-Mischung wird die Packung trockengesaugt, wobei das Pulver an der Oberfläche gelockert und an den Rand der Kutsche gepreßt wird, damit das Alkoholgemisch gleichmäßig abgesaugt werden kann. Der in der Saugflasche gesammelte Alkohol wird zur Destillation gesammelt. Das gut abgesaugte, alkoholfechte Pulver wird im Vakuumrotationsverdampfer getrocknet. Hierbei ist darauf zu achten, daß sich im Rundkolben eine Schlaufe aus elastischem Material (z.B. Polyamidseil) befindet, damit das Pulver gut bewegt wird und sich keine Klumpen bilden können. Klumpenbildung kann durch vorheriges Sieben des feuchten Pulvers vollständig vermieden werden. Der Kolben des Rotationsverdampfers wird mit einem Wasserbad erwärmt (Wassertemperatur 70 °C). Der Rundkolben ist zu einem Drittel mit dem Material zu füllen. Am Kolbenhals muß sich ein Filter aus Polyamidseide befinden, dessen Aufgabe darin besteht, das Heraussaugen des trockenen Pulvers aus dem Rundkolben zu verhindern.

## Präparation des vesikulären Trägermatrials (Beispiele) Hier: Zuckerrüben-Material

1. Zellaggregate aus der Zellkultur mit Leitungswasser gut waschen.

2. Phosphorsaures EtOH (1 ml Phosphorsäure pro 1 l 80 - 90 % EtOH) in die Packung aus Zellaggregaten hineinwaschen. Für eine Packung von 3 - 4 l werden ca. 7 l angesäuerten EtOH benötigt. EtOH wird am Ablauf zur Regeneration aufgefangen, sobald der ablaufende Extrakt klar und stark gelb gefärbt ist. Die Extraktion wird danach mit 96 % EtOH fortgesetzt, bis die Zellaggregate entfärbt sind und der Extrakt farblos abläuft (ca. 6 l).

3. Die EtOH-feuchte Packung wird nun mit 6 l 1 % Phosphorsäure (mit $Na_2HPO_4$ auf pH 2.5 gebracht) gespült. Die Spülung ist beendet, wenn der ablaufende EtOH einen Wassergehalt von ca. 40 % aufweist.

4. Anschließend wird die Packung mit je 3 l Aqua dest. zweimal aufgerührt und unter Rühren bis zum Festwerden drainiert. Anschließend wird mit 3 l Aqua dest. im Festbett eluiert.

5. Die Packung wird unter Zugabe von Aqua dest. auf ein Suspensionsvolumen von ca. 6 l gebracht. Die Suspension wird nun auf pH 6.5 gebracht und mit 7 g KCl versetzt. In die Suspension werden 0.3 l Trypsinlösung (ca. 23 g/l) eingerührt.

6. Ansatz 24 Stunden unter langsamem Rühren auf 20 - 25 °C halten. Danach nochmals 0.3 l Trypsinlösung wie unter (5) zugeben.

7. Nach ca. 48 Stunden Zugabe von 5 ml eines neutral reagierenden ionischen Tensids (Konzentrat). Nachspülen mit Aqua dest.

8. Die wasserfeuchte Packung wird nun mit ca. 6 l 0.5 % NaCl-Lösung gewaschen. Packung danach in 3 l Soerensen-Puffer (pH 7) suspendieren und der Puffer ablaufen lassen. In die Packung nun 3 l Aqua dest. einziehen lassen.

9. Der Ansatz nach (8) kann nun einer Naßsiebung zugeführt werden oder nach Trocknung im Luftstrom einer Trockensiebung zugeführt werden.

Präparation des vesikulären Trägermaterials (Beispiel) Hier: Kohl-Material

1. Gewaschener Kohl wird entblättert und gehäckselt. Danach gut mit Leitungswasser waschen.

2. 100 - 120 kg gehäckselte Masse werden in angesäuertem Wasser (400 l $H_2O$ + 1 l $H_3PO_4$ + 0.2 kg $Na_2HPO_4$) inkubiert (24 - 48 h, 4-10°C). Ablauf und waschen mit EtOH (50 %, dann 70 %).

3. Nach Ablauf der wässrigen EtOH-Ablauge wird mit ca. 60°C heißem 80 -90 % EtOH extrahiert. Dabei werden Lipidbestandteile herausgelöst und Wasser verdrängt.

4. Pflanzenmasse mit Wasser waschen. Nach Ablauf des Waschwassers Masse in 100 Liter Trypsinlösung (enthält ca. 0.04 kg Trypsin) suspendieren und ca. 48 - 60 Stunden bei 20 - 25°C langsam rühren. Die Suspensionslösung sollte einen pH von 6.5 aufweisen.

5. Nach Ablauf der Suspensionslösung wird die Packung unter Rühren mehrmals gewaschen, bis der Ablauf Ninhydrin-negativ ist.

6. Die Masse wird nun vermoost, nochmals gewaschen (Wasser) und mit EtOH (Gradient 50 - 70 - 80 - 90 - 96 %) entwässert.

7. Die Trocknung erfolgt im warmem Luftstrom. Anschließend kann das Trockenmaterial vermahlen werden.

Die Verfahren zur Herstellung des vesikulären Materials können im Rahmen der jeweils gültigen lebensmittelrechtlichen Bestimmungen variiert werden.

**Patentansprüche**

1.  Verwendung von vesikulären hochgereinigten Pflanzenzellen als Zusatz zu Lebensmitteln.

2.  Verwendung nach Anspruch 1 als Trennschicht zwischen Schichten unterschiedlicher Feuchtigkeit.

3.  Verwendung nach Anspruch 1 als Zusatz vorgefertigten - insbesondere vorgebratenen - Teigmassen.

4.  Verwendung nach Anspruch 1 als Träger für Geschmacks und Aromastoffe.

5.  Lebensmittel enthaltend vesikuläre hochgereinigte Pflanzenzellen.

6.  Verwendung nach Anspruch 1 zur Stabilisierung von Schlagmassen und halbfesten Zubereitungen.

7.  Verwendung nach Anspruch 1 zur Erhöhung der Viskosität von Flüssigkeiten.

8.  Verwendung als physikalischer Emulgator in kosmetischen Zubereitungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DD-A- 247 570 (HUMBOLD UNIVERSITÄT ZU BERLIN) <br> * Zusammenfassung * * Seite 4; Beispiel 7 * <br><br> ----- | 1 | A 23 L 1/05 <br> A 23 L 1/22 <br> A 23 L 1/308 |

**RECHERCHIERTE SACHGEBIETE (Int. Cl.5)**

A 23 L

Der vorliegende Recherchenbericht wurde für alle Patentansprüche erstellt

| Recherchenort | Abschlußdatum der Recherche | Prüfer |
|---|---|---|
| BERLIN | 05-03-1992 | SCHULTZE D |

EPO FORM 1503 03.82 (P0403)